(19) Europäisches Patentamt
European Patent Office
Office européen des brevets

(11) **EP 4 737 858 A1**

(12) **EUROPEAN PATENT APPLICATION**
published in accordance with Art. 153(4) EPC

(43) Date of publication:
**06.05.2026 Bulletin 2026/19**

(51) International Patent Classification (IPC):
***G01C 21/34*** *(2006.01)*     ***G01S 19/39*** *(2010.01)*
***G01S 19/49*** *(2010.01)*

(21) Application number: **23940937.8**

(22) Date of filing: **25.12.2023**

(86) International application number:
**PCT/CN2023/141390**

(87) International publication number:
**WO 2025/000989 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.06.2023 CN 202310803029**

(71) Applicant: **Huizhou Desay SV Automotive Co.,
Ltd.
Huizhou, Guangdong 516006 (CN)**

(72) Inventors:
• **KANG, Yixuan
Huizhou
Guangdong 516006 (CN)**
• **WANG, Dexiang
Huizhou
Guangdong 516006 (CN)**
• **CHEN, Qingye
Huizhou
Guangdong 516006 (CN)**
• **LU, Wei
Huizhou
Guangdong 516006 (CN)**
• **SUN, Yuanguang
Huizhou
Guangdong 516006 (CN)**

(74) Representative: **Carangelo, Pierluigi et al
Jacobacci & Partners S.p.A.
Via Tomacelli 146
00186 Roma (IT)**

(54) **VEHICLE PATH POINT DETERMINATION METHOD AND APPARATUS, AND VEHICLE AND STORAGE MEDIUM**

(57) Provided are a vehicle waypoint determination method, a vehicle waypoint determination apparatus, a vehicle, and a storage medium. The method includes acquiring an original waypoint sequence of a vehicle in a geodetic coordinate system; converting the original waypoint sequence into an intermediate waypoint sequence in a coordinate system with the origin being a starting waypoint of a way of the vehicle; determining a slope of each waypoint in the intermediate waypoint sequence; and converting, according to the slope of each waypoint in the intermediate waypoint sequence, the intermediate waypoint sequence into a target waypoint sequence in a dead reckoning (DR) coordinate system. According to the method, the original waypoint sequence of the vehicle in the geodetic coordinate system is converted into the intermediate waypoint sequence in the coordinate system with the origin being the starting waypoint of the way of the vehicle, and the slope of each waypoint in the intermediate waypoint sequence is determined so that the intermediate waypoint sequence is converted into the target waypoint sequence in the DR coordinate system.

Thus, coordinates of the vehicle in the DR coordinate system can be obtained conveniently and accurately.

FIG. 1

**Description**

This application claims priority to Chinese Patent Application No. 202310803029.2 filed with the China National Intellectual Property Administration (CNIPA) on Jun. 30, 2023, the disclosure of which is incorporated herein by reference in its entirety.

TECHNICAL FIELD

Embodiments of the present application relate to the field of automobile navigation and, in particular, to a vehicle waypoint determination method, a vehicle waypoint determination apparatus, a vehicle, and a storage medium.

BACKGROUND

Dead reckoning (DR) is a method for estimating a position of an object at the next moment based on a position of the object at the current moment and its measured moving distance and moving direction. DR calibration is a process of optimizing an internal parameter of an algorithm to reduce the error between a position estimated by DR and an actual moving position of a vehicle, to achieve optimal performance. The key to DR calibration is to map the measured actual moving positions of the vehicle to a DR coordinate system. Currently, the mainstream method for the DR calibration is to implement this mapping process by using an Automation Dynamic Motion Analyzer (ADMA) or a ranging device. These mainstream methods have the disadvantages of high costs, complicated measurement conversion, and low efficiency.

Therefore, the problem of how to conveniently obtain coordinates of the vehicle in the DR coordinate system exists in the related art.

SUMMARY

The present application provides a vehicle waypoint determination method, a vehicle waypoint determination apparatus, a vehicle, and a storage medium to solve the problem in the related art of a failure to accurately map actual moving positions of a vehicle to a DR coordinate system.

According to an aspect of the present application, a vehicle waypoint determination method is provided. The method includes the steps below.

An original waypoint sequence of a vehicle in a geodetic coordinate system is acquired.

The original waypoint sequence is converted into an intermediate waypoint sequence in a coordinate system with the origin being a starting waypoint of a way of the vehicle.

A slope of each waypoint in the intermediate waypoint sequence is determined.

The intermediate waypoint sequence is converted into a target waypoint sequence in a DR coordinate system according to the slope of each waypoint in the intermediate waypoint sequence.

According to another aspect of the present application, a vehicle waypoint determination apparatus is provided. The apparatus includes an acquisition module, a first conversion module, a determination module, and a second conversion module.

The acquisition module is configured to acquire an original waypoint sequence of a vehicle in a geodetic coordinate system.

The first conversion module is configured to convert the original waypoint sequence into an intermediate waypoint sequence in a coordinate system with the origin being a starting waypoint of a way of the vehicle.

The determination module is configured to determine a slope of each waypoint in the intermediate waypoint sequence.

The second conversion module is configured to convert, according to the slope of each waypoint in the intermediate waypoint sequence, the intermediate waypoint sequence into a target waypoint sequence in a DR coordinate system.

According to another aspect of the present application, a vehicle is provided. The vehicle includes at least one processor and a memory.

The memory is communicatively connected to the at least one processor.

A computer program executable by the at least one processor is stored in the memory, and the computer program, when executed by the at least one processor, causes the at least one processor to perform the vehicle waypoint determination method of any embodiment of the present application.

According to another aspect of the present application, a computer-readable storage medium is provided. The computer-readable storage medium has computer instructions stored thereon, where the computer instructions, when executed by a processor, cause the processor to perform the vehicle waypoint determination method of any embodiment of the present application.

Embodiments of the present application provide the vehicle waypoint determination method, the vehicle waypoint determination apparatus, the vehicle, and the storage medium. The method includes acquiring the original waypoint sequence of the vehicle in the geodetic coordinate system; converting the original waypoint sequence into the intermediate waypoint sequence in the coordinate system with the origin being the starting waypoint of the way of the vehicle; determining the slope of each waypoint in the intermediate waypoint sequence; and converting, according to the slope of each waypoint in the intermediate waypoint sequence, the intermediate waypoint sequence into the target waypoint sequence in the DR coordinate system. According to the method, the original waypoint sequence of the vehicle in the geodetic coordinate system is converted into the intermediate waypoint sequence in the coordinate system with the origin being the starting waypoint of the way of the vehicle, and the slope of each waypoint in the intermediate waypoint sequence is determined so that the intermediate waypoint sequence is converted into the target waypoint sequence in the DR coordinate system. Thus, coordinates of the vehicle in the DR coordinate system can be obtained conveniently and accurately, thereby solving the problem in the related art of the failure to accurately map the actual moving positions of the vehicle to the DR coordinate system.

BRIEF DESCRIPTION OF DRAWINGS

To illustrate technical solutions of embodiments of the present application more clearly, drawings used in the description of the embodiments are briefly described below. Apparently, the drawings described below illustrate part of embodiments of the present application. Those of ordinary skill in the art may obtain other drawings based on these drawings on the premise that no creative work is done.

FIG. 1 is a flowchart of a vehicle waypoint determination method according to embodiment one of the present application.

FIG. 2 is a schematic diagram of a way of a vehicle in a geodetic coordinate system according to an embodiment of the present application.

FIG. 3 is a flowchart of a vehicle waypoint determination method according to embodiment two of the present application.

FIG. 4 is a schematic diagram of a way of a vehicle according to an embodiment of the present application.

FIG. 5 is another schematic diagram of a way of a vehicle according to an embodiment of the present application.

FIG. 6 is a flowchart of a vehicle waypoint determination method according to embodiment three of the present application.

FIG. 7 is a schematic diagram of a way of a vehicle in a DR coordinate system according to an embodiment of the present application.

FIG. 8 is a structural diagram of a vehicle waypoint determination apparatus according to embodiment four of the present application.

FIG. 9 is a structural diagram of a vehicle according to embodiment five of the present application.

DETAILED DESCRIPTION

For a better understanding of solutions of the present application by those skilled in the art, technical solutions in embodiments of the present application are described clearly and completely hereinafter in conjunction with the drawings in the embodiments of the present application. Apparently, the embodiments described hereinafter are part, not all, of embodiments of the present application. Based on the embodiments of the present application, all other embodiments obtained by those of ordinary skill in the art without creative work are within the scope of the present application. It is to be understood that steps described in method embodiments of the present application may be performed in sequence and/or in parallel. Additionally, the method embodiments may include additional steps and/or omit some of the illustrated steps. The scope of the present application is not limited in this respect.

The term "include" and variations thereof used herein refer to "including, but not limited to". The term "based on" refers to "at least partially based on". The term "an embodiment" refers to "at least one embodiment". The term "another embodiment" refers to "at least one another embodiment". The term "some embodiments" refers to "at least some embodiments". Definitions of other terms are given in the description hereinafter.

It is to be noted that terms such as "first" and "second" in the description, claims, and drawings of the present application are used to distinguish between similar objects and are not necessarily used to describe a particular order or sequence. It is to be understood that data used in this manner are interchangeable where appropriate so that the embodiments of the present application described herein can be implemented in an order not illustrated or described herein. Additionally, terms "include" and "have" and any variations thereof are intended to encompass a non-exclusive inclusion. For example, a process, method, system, product, or device that includes a series of steps or units not only includes the expressly listed steps or units but may also include other steps or units that are not expressly listed or are inherent to such process, method, product, or device.

It is to be noted that "one" and "multiple" mentioned in the present application are not limiting but illustrative. It is to be understood by those skilled in the art that "one" and "multiple" are construed as "one or more" unless otherwise specified in the context.

The names of messages or information exchanged between apparatuses in embodiments of the present application are illustrative and not to limit the scope of the messages or information.

Embodiment one

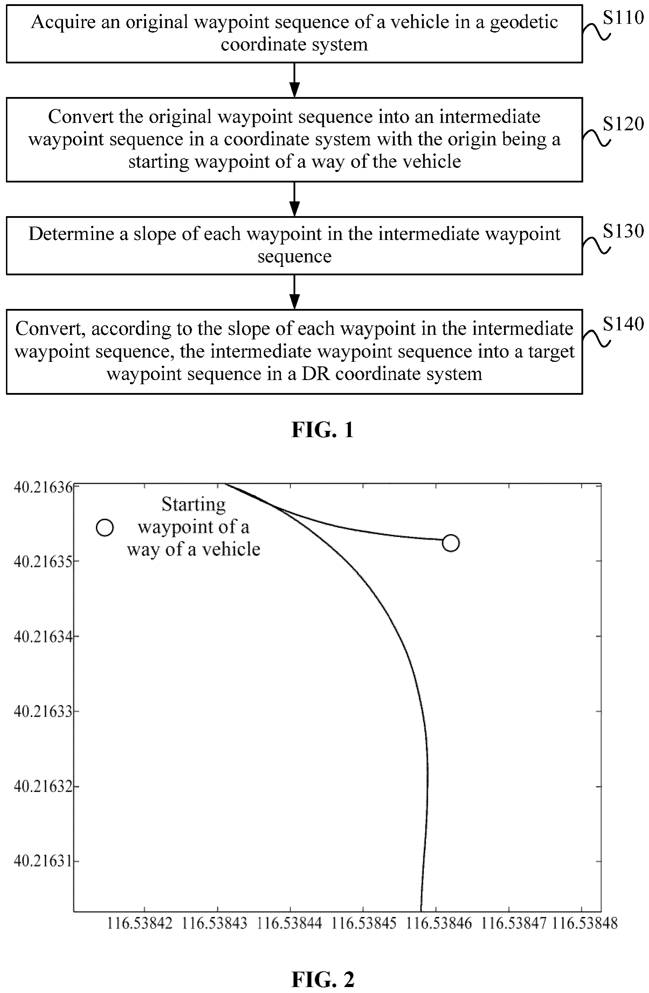

FIG. 1 is a flowchart of a vehicle waypoint determination method according to embodiment one of the present application. The method is applicable to the determination of coordinates of a way of a vehicle in a DR coordinate system. The method may be performed by a vehicle waypoint determination apparatus which may be implemented by software and/or hardware and is generally integrated into the vehicle. In this embodiment, the vehicle includes, but is not limited to, a general-purpose transport vehicle, a special-purpose vehicle, and a vehicle for a special use.

As shown in FIG. 1, the vehicle waypoint determination method according to embodiment one of the present application includes the steps below.

In S110, an original waypoint sequence of the vehicle in a geodetic coordinate system is acquired.

The vehicle may be a driving vehicle. The geodetic coordinate system is a coordinate system established with a reference ellipsoid as a reference surface in geodesy. A position of a ground point is represented by geodetic longitude, geodetic latitude, and geodetic height. The original waypoint sequence may be a sequence of waypoints on the way the vehicle drives in the geodetic coordinate system.

In this embodiment, the original waypoint sequence of the way the vehicle drives in the geodetic coordinate system may be acquired. How to acquire the original waypoint sequence is not limited in this embodiment.

In S120, the original waypoint sequence is converted into an intermediate waypoint sequence in a coordinate system with the origin being a starting waypoint of the way of the vehicle.

The way of the vehicle may be the way the vehicle drives. The way of the vehicle may be acquired in a driving process of the vehicle or acquired from when the vehicle is stationary, which is not limited in this embodiment. In this embodiment, the way of the vehicle is a distance for which the vehicle travels straight. The intermediate waypoint sequence may be a set of data points in the coordinate system with the origin being the starting waypoint of the way of the vehicle. A horizontal axis of the coordinate system where the intermediate waypoint sequence is located may point to the east, and a vertical axis of the coordinate system may point to the north. It is to be understood that the horizontal axis of the coordinate system where the intermediate waypoint sequence is located may point to the west, and the vertical axis of the coordinate system may point to the south, which is not limited in this embodiment.

In this embodiment, each waypoint in the original waypoint sequence may be projected and subjected to coordinate translation so that the intermediate waypoint sequence in the coordinate system with the origin being the starting waypoint of the way of the vehicle is obtained.

In S130, a slope of each waypoint in the intermediate waypoint sequence is determined.

The slope is a quantity for representing a degree to which a straight line or a tangent of a curved line is inclined relative to the horizontal axis.

In this embodiment, the slope of each waypoint in the intermediate waypoint sequence may be determined in a slope calculation manner. The slope calculation manner is not limited in this embodiment. For example, a slope of two waypoints adjacent to a waypoint is calculated so that the slope of the waypoint can be determined.

In S140, the intermediate waypoint sequence is converted into a target waypoint sequence in a DR coordinate system according to the slope of each waypoint in the intermediate waypoint sequence.

The DR coordinate system may be a coordinate system with the origin being a starting waypoint of the way of the vehicle. A horizontal axis of the DR coordinate system may be a rightward extension line of the center of a rear axle of the vehicle when the way of the vehicle starts, and the vertical axis of the DR coordinate system may be an orientation of the front of the vehicle when the vehicle starts. The target waypoint sequence may be a set of coordinates of the way of the vehicle in the DR coordinate system.

In this embodiment, the angle between the intermediate waypoint sequence and the DR coordinate system may be calculated according to the slope of the waypoint in the intermediate waypoint sequence, and the intermediate waypoint sequence may be converted into the target waypoint sequence in the DR coordinate system according to the angle.

Embodiment one of the present application provides the vehicle waypoint determination method. The method includes acquiring the original waypoint sequence of the vehicle in the geodetic coordinate system; converting the original waypoint sequence into the intermediate waypoint sequence in the coordinate system with the origin being the starting waypoint of the way of the vehicle; determining the slope of each waypoint in the intermediate waypoint sequence; and converting, according to the slope of each waypoint in the intermediate waypoint sequence, the intermediate waypoint sequence into the target waypoint sequence in the DR coordinate system. According to the method, the original waypoint sequence of the vehicle in the geodetic coordinate system is converted into the intermediate waypoint sequence in the coordinate system with the origin being the starting waypoint of the way of the vehicle, and the slope of each waypoint in the intermediate waypoint sequence is determined so that the intermediate waypoint sequence is converted into the target waypoint sequence in the DR coordinate system. Thus, the coordinates of the vehicle in the DR coordinate system can be obtained conveniently and accurately, thereby solving the problem in the related art of a failure to accurately map actual moving positions of the vehicle to the DR coordinate system.

On the basis of the preceding embodiment, variant embodiments of the preceding embodiment are proposed. It is to be noted that for brevity of description, only differences from the preceding embodiment are described in the variant embodiments.

In an embodiment, that the original waypoint sequence of the vehicle in the geodetic coordinate system is acquired includes the steps below.

After the vehicle travels straight for a distance, latitude and longitude coordinates and yaw angles of the vehicle are determined with onboard integrated navigation.

The original waypoint sequence is obtained according to the latitude and longitude coordinates and the yaw angles.

The onboard integrated navigation may be an integrated navigation system of the vehicle for positioning the vehicle by using multiple techniques. For example, a global navigation satellite system (GNSS), inertial navigation, visual navigation, laser ranging, sonar detection, and an odometer may each be a component of the integrated navigation system. The component of the onboard integrated navigation is not limited in this embodiment. For example, in this embodiment, integrated positioning may be performed on the vehicle with the GNSS and the inertial navigation. Latitude and longitude coordinates may be a latitude coordinate and a longitude coordinate of the vehicle in the geodetic coordinate system. A yaw angle may be an angle between an actual moving direction of the vehicle and a horizontal axis in the geodetic coordinate system.

In this embodiment, a steering wheel of the vehicle may be placed at 0°, the vehicle may travel straight, and the integrated positioning may be performed on the vehicle with the onboard integrated navigation so that the original waypoint sequence $\{p_n\}$ is obtained, where each data point $p_i$ includes the latitude and longitude coordinates $(x_i, y_i)$ and the yaw angle $yaw_i$ of the vehicle in the geodetic coordinate system. For example, FIG. 2 is a schematic diagram of a way of a vehicle in a geodetic coordinate system according to an embodiment of the present application. As shown in FIG. 2, after the vehicle travels straight for a distance from the starting waypoint of the way of the vehicle, the vehicle starts to move freely. Waypoints in the original waypoint sequence recorded in this embodiment are waypoints on the way the vehicle travels straight. An abscissa is the longitude coordinate and an ordinate is the latitude coordinate.

In this embodiment, the coordinates of the vehicle in the geodetic coordinate system can be more accurately determined with the onboard integrated navigation, thereby improving the accuracy of coordinate positioning.

Embodiment two

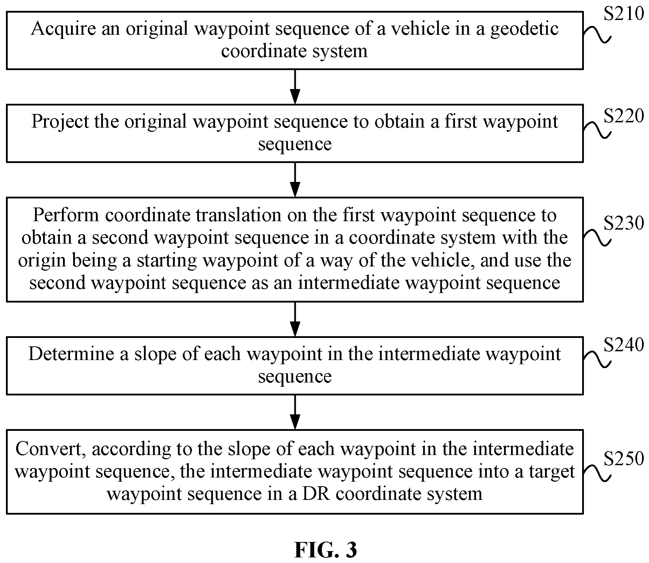

FIG. 3 is a flowchart of a vehicle waypoint determination method according to embodiment two of the present application. Embodiment two is an optimization on the basis of the preceding embodiments. For the content not described in detail in this embodiment, refer to embodiment one.

As shown in FIG. 3, the vehicle waypoint determination method according to embodiment two of the present application includes the steps below.

In S210, an original waypoint sequence of a vehicle in a geodetic coordinate system is acquired.

In S220, the original waypoint sequence is projected so that a first waypoint sequence is obtained.

The first waypoint sequence may be a data point sequence obtained after all latitude and longitude coordinates in the original waypoint sequence are projected. The original waypoint sequence may be projected through Universal Transverse Mercator (UTM) projection or in other projection manners, which are not limited in this embodiment.

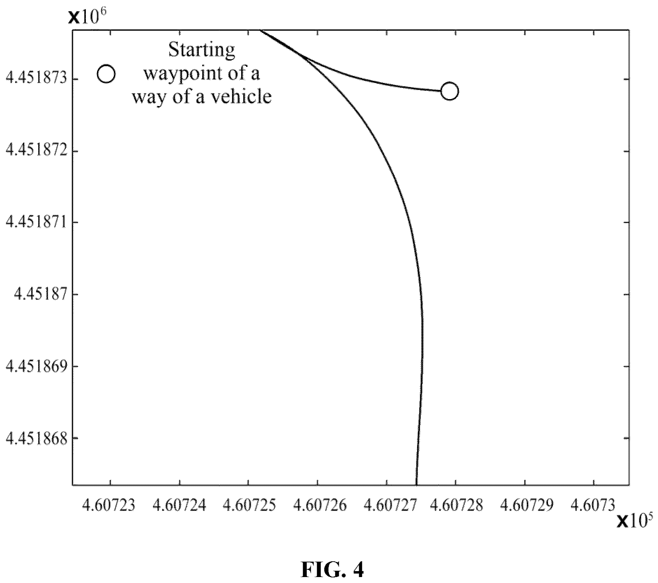

In this embodiment, latitude and longitude coordinates $(x_i, y_i)$ of each waypoint in the original waypoint sequence $\{p_n\}$ may be projected so that the first waypoint sequence $\{p_n^1\}$ is obtained, where coordinates of each waypoint in the first waypoint sequence are $(x_i^1, y_i^1)$. For example, FIG. 4 is a schematic diagram of a way of a vehicle according to an embodiment of the present application. As shown in FIG. 4, an abscissa represents the distance from a waypoint to the central meridian of a longitude zone, and an ordinate represents the distance from a waypoint to the equator. The way of the vehicle in FIG. 4 is the first waypoint sequence.

In an embodiment, the abscissa in a coordinate system which the first waypoint sequence belongs to represents the distance from the waypoint to the central meridian of the longitude zone, and the ordinate in the coordinate system represents the distance from the waypoint to the equator.

The central meridian of the longitude zone is the longitude center line of a projection system. The central meridian of the longitude zone is generally used as a reference point of the x-axis origin of a projection coordinate system. The equator is a longest circumference among trajectories generated by points on the surface of the earth as the earth rotates.

In this embodiment, the abscissa $x_i^1$ in the coordinate system which the first waypoint sequence $\{p_n^1\}$ belongs to represents the distance from the waypoint to the central meridian of the longitude zone, and the ordinate $y_i^1$ in the coordinate system represents the distance from the waypoint to the equator.

In S230, coordinate translation is performed on the first waypoint sequence so that a second waypoint sequence in a coordinate system with the origin being a starting waypoint of the way of the vehicle is obtained, and the second waypoint sequence is used as an intermediate waypoint sequence.

The second waypoint sequence may be a first waypoint sequence subjected to the coordinate translation.

In this embodiment, the coordinate translation may be performed on each waypoint in the first waypoint sequence $\{p_n^1\}$ so that the second waypoint sequence $\{p_n^2\}$ in the coordinate system with the origin being the starting waypoint of the way of the vehicle is obtained, and the second waypoint sequence $\{p_n^2\}$ is used as the intermediate waypoint sequence $\{p_n^2\}$. Coordinates of a waypoint in the intermediate waypoint sequence $\{p_n^2\}$ are $(x_i^2, y_i^2)$, and the origin is $(x_1^2, y_1^2)$. For example, the specific translation operation is as follows:

$$x_i^2 = x_i^1 - x_1^1,$$

and

$$y_i^2 = y_i^1 - y_1^1.$$

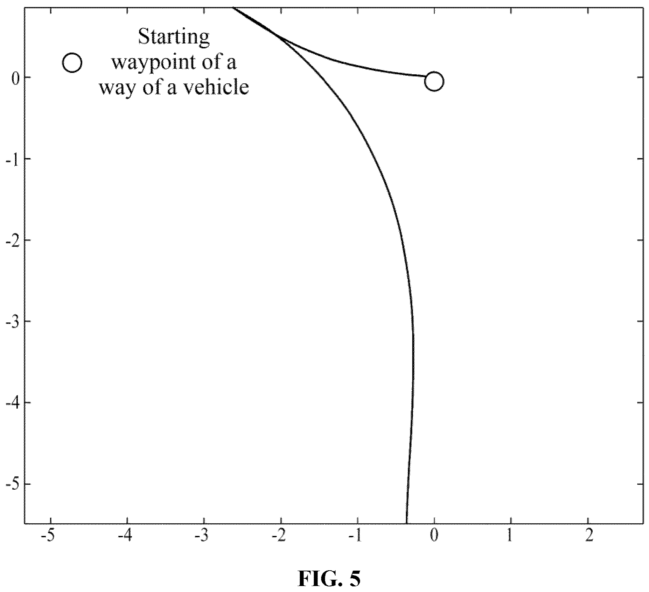

FIG. 5 is another schematic diagram of a way of a vehicle according to an embodiment of the present application. As shown in FIG. 5, a horizontal axis points to the east, and a vertical axis points to the north.

In S240, a slope of each waypoint in the intermediate waypoint sequence is determined.

In S250, the intermediate waypoint sequence is converted into a target waypoint sequence in a DR coordinate system according to the slope of each waypoint in the intermediate waypoint sequence.

Embodiment two of the present application provides the vehicle waypoint determination method. Further, the original waypoint sequence is projected and subjected to the coordinate translation so that the intermediate waypoint sequence is obtained. The slope of each waypoint in the intermediate waypoint sequence is determined so that the intermediate waypoint sequence can be converted into the target waypoint sequence in the DR coordinate system. Thus, coordinates of the vehicle in the DR coordinate system can be obtained conveniently and accurately, thereby solving the problem in the related art of a failure to accurately map actual moving positions of the vehicle to the DR coordinate system.

In an embodiment, each waypoint in the intermediate waypoint sequence includes a yaw angle. Accordingly, before the slope of each waypoint in the intermediate waypoint sequence is determined, the method further includes the step below.

At least one waypoint in the intermediate waypoint sequence is deleted so that a screened intermediate waypoint sequence is obtained, where a difference between a yaw angle of each of the at least one waypoint and a yaw angle of the starting waypoint of the way of the vehicle is greater than a preset yaw angle.

The preset yaw angle may be a preset difference between yaw angles. The preset yaw angle may be set according to actual situations. For example, the preset yaw angle may be any value from 0° to 0.1°.

In this embodiment, the at least one waypoint in the intermediate waypoint sequence $\{p_n^2\}$ may be deleted so that the screened intermediate waypoint sequence is obtained, where the difference between the yaw angle of each of the at least one waypoint and the yaw angle $yaw_1$ of the starting waypoint of the way of the vehicle (that is, the origin $p_1^2$) is greater than the preset yaw angle (for example, 0.05°). A subscript of a screened waypoint in $\{p_n^2\}$ is denoted as j.

In this embodiment, each waypoint whose yaw angle has a relatively large difference from the yaw angle of the origin in the intermediate waypoint sequence is screened out so that waypoints that are not on a straight line can be screened out, and an average slope obtained subsequently is more accurate.

In an embodiment, that the slope of each waypoint in the intermediate waypoint sequence is determined includes the steps below.

For each waypoint in the intermediate waypoint sequence, a slope of two waypoints adjacent to each waypoint is determined.

The determined slope of the two waypoints is determined as the slope of each waypoint.

In this embodiment, when the slope of each waypoint in the intermediate waypoint sequence is determined, for each waypoint in the intermediate waypoint sequence, the slope of the two waypoints adjacent to each waypoint may be used as the slope of each waypoint. For example, the slope $k_j$ of each waypoint may be calculated as follows: $k_j = \frac{y_{j+1} - y_{j-1}}{x_{j+1} - x_{j-1}}$.

Embodiment three

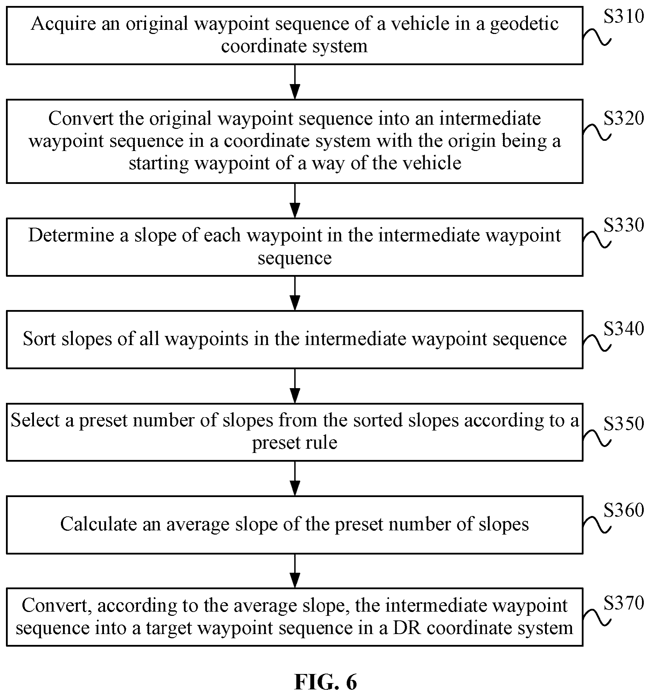

FIG. 6 is a flowchart of a vehicle waypoint determination method according to embodiment three of the present application. Embodiment three is an optimization on the basis of the preceding embodiments. For the content not described in detail in this embodiment, refer to embodiment one.

As shown in FIG. 6, the vehicle waypoint determination method according to embodiment three of the present application includes the steps below.

In S310, an original waypoint sequence of a vehicle in a geodetic coordinate system is acquired.

In S320, the original waypoint sequence is converted into an intermediate waypoint sequence in a coordinate system with the origin being a starting waypoint of a way of the vehicle.

In S330, a slope of each waypoint in the intermediate waypoint sequence is determined.

In S340, slopes of all waypoints in the intermediate waypoint sequence are sorted.

In this embodiment, after the slope of each waypoint in the intermediate waypoint sequence is obtained, the slopes of all the waypoints may be sorted in descending order or in ascending order.

In S350, a preset number of slopes are selected from the sorted slopes according to a preset rule.

The preset rule may be a rule for selecting slopes. The preset rule is not limited in this embodiment. For example, the preset rule may be to select some data in the middle of the sorted slopes or to select modes from all the slopes. A value of the preset number may be set according to actual situations and is not limited in this embodiment.

In this embodiment, the preset number of slopes may be selected from the sorted slopes according to the preset rule. For example, in this embodiment, 50% of the sorted slopes may be selected.

In S360, an average slope of the preset number of slopes is calculated.

The average slope may be an average of the preset number of slopes.

In this embodiment, after the preset number of slopes are obtained, the average slope $k$ of the preset number of slopes may be calculated.

In S370, the intermediate waypoint sequence is converted into a target waypoint sequence in a DR coordinate system according to the average slope.

In this embodiment, the angle between the waypoints in the intermediate waypoint sequence and a coordinate axis of the coordinate system where the intermediate waypoint sequence is located may be determined according to the average slope so that the intermediate waypoint sequence is converted into the target waypoint sequence in the DR coordinate system according to the angle.

Embodiment three of the present application provides the vehicle waypoint determination method. Further, the slope of each waypoint in the intermediate waypoint sequence is determined, the preset number of slopes are selected from the sorted slopes according to the preset rule, and the average slope is calculated so that the intermediate waypoint sequence is converted into the target waypoint sequence in the DR coordinate system according to the average slope. Thus, coordinates of the vehicle in the DR coordinate system can be obtained conveniently and accurately, thereby solving the problem in the related art of a failure to accurately map actual moving positions of the vehicle to the DR coordinate system.

In an embodiment, that the intermediate waypoint sequence is converted into the target waypoint sequence in the DR coordinate system according to the average slope includes the steps below.

A first angle of the intermediate waypoint sequence in the coordinate system where the intermediate waypoint sequence is located is calculated according to the average slope.

The intermediate waypoint sequence is converted into the target waypoint sequence in the DR coordinate system according to the first angle and conversion formulae.

The first angle may be an angle between a straight line where the waypoints in the intermediate waypoint sequence are located and the coordinate axis. The first angle may be an angle with a vertical axis or an angle with a horizontal axis, which is not limited in this embodiment. The conversion formulae may be formulae for converting the intermediate waypoint sequence into the target waypoint sequence in the DR coordinate system.

In this embodiment, the first angle $\theta$ may be calculated according to the average slope $k$, for example,

$$\theta = \frac{\pi}{2} - \arctan(k),$$ where $\theta$ represents an angle between the straight line where the waypoints in the intermediate waypoint sequence are located and the vertical axis.

In an embodiment, the conversion formulae include the following:

$$x_i^3 = x_i^2 \cdot \cos(\theta) - y_i^2 \cdot \sin(\theta),$$

and

$$y_i^3 = x_i^2 \cdot \sin(\theta) + y_i^2 \cdot \cos(\theta);$$

where $i$ represents a positive integer, $\theta$ represents the first angle, $(x_i^2, y_i^2)$ represents coordinates of a waypoint in the intermediate waypoint sequence, and $(x_i^3, y_i^3)$ represents coordinates of a waypoint in the target waypoint sequence.

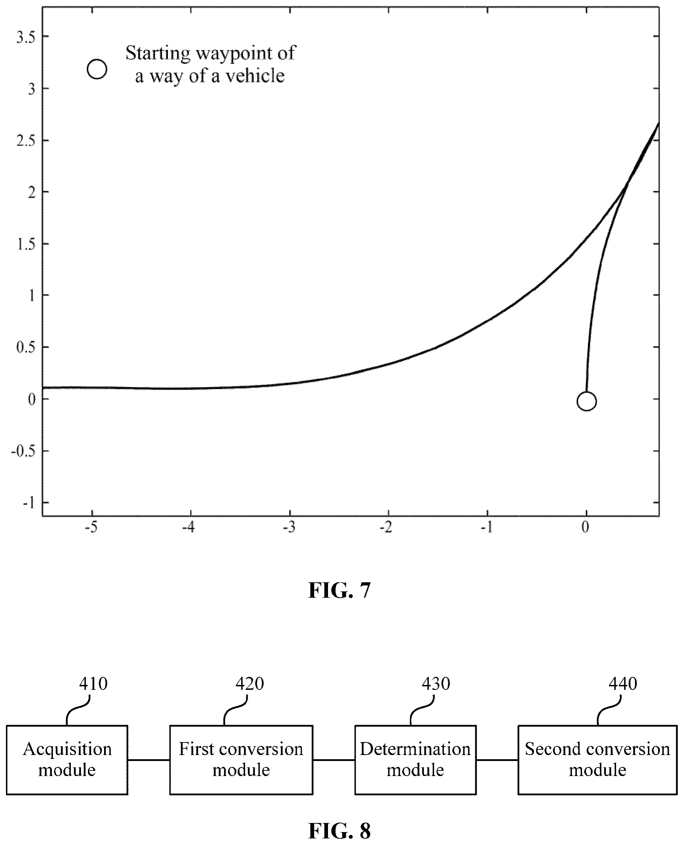

In this embodiment, the coordinates of the waypoint in the intermediate waypoint sequence may be converted into the coordinates $(x_i^3, y_i^3)$ of the waypoint in the target waypoint sequence according to the above conversion formulae. For example, FIG. 7 is a schematic diagram of a way of a vehicle in a DR coordinate system according to an embodiment of the present application. As shown in FIG. 7, an actual moving trajectory of the vehicle is mapped to the DR coordinate system.

In this embodiment, onboard integrated navigation acquires vehicle waypoints and outputs coordinates in the geodetic coordinate system, and the coordinates in the geodetic coordinate system are subjected to UTM projection, coordinate translation, filtering, and rotation to be converted into coordinates in the DR coordinate system. Compared with a traditional method where an ADMA or a ranging device is used, the method of this embodiment has the advantages of a low device cost, convenient installation, high accuracy of conversion between coordinate systems, a fast conversion speed, and relatively great tolerance to an installation error of an integrated navigation device.

Embodiment four

FIG. 8 is a structural diagram of a vehicle waypoint determination apparatus according to embodiment four of the present application. The apparatus is applicable to the determination of coordinates of a way of a vehicle in a DR coordinate system. The apparatus may be implemented by software and/or hardware and is generally integrated into the vehicle.

As shown in FIG. 8, the apparatus includes an acquisition module 410, a first conversion module 420, a determination module 430, and a second conversion module 440.

The acquisition module 410 is configured to acquire an original waypoint sequence of the vehicle in a geodetic coordinate system.

The first conversion module 420 is configured to convert the original waypoint sequence into an intermediate waypoint sequence in a coordinate system with the origin being a starting waypoint of the way of the vehicle.

The determination module 430 is configured to determine a slope of each waypoint in the intermediate waypoint sequence.

The second conversion module 440 is configured to convert, according to the slope of each waypoint in the intermediate waypoint sequence, the intermediate waypoint sequence into a target waypoint sequence in a DR coordinate system.

Embodiment four provides the vehicle waypoint determination apparatus. The acquisition module is configured to acquire the original waypoint sequence of the vehicle in the geodetic coordinate system. The first conversion module is configured to convert the original waypoint sequence into the intermediate waypoint sequence in the coordinate system with the origin being the starting waypoint of the way of the vehicle. The determination module is configured to determine the slope of each waypoint in the intermediate waypoint sequence. The second conversion module is configured to convert, according to the slope of each waypoint in the intermediate waypoint sequence, the intermediate waypoint sequence into the target waypoint sequence in the DR coordinate system. The original waypoint sequence of the vehicle in the geodetic coordinate system is converted into the intermediate waypoint sequence in the coordinate system with the origin being the starting waypoint of the way of the vehicle, and the slope of each waypoint in the intermediate waypoint sequence is determined so that the intermediate waypoint sequence is converted into the target waypoint sequence in the DR coordinate system. Thus, the coordinates of the vehicle in the DR coordinate system can be obtained conveniently and accurately, thereby solving the problem in the related art of a failure to accurately map actual moving positions of the vehicle to the DR coordinate system.

Further, the first conversion module 420 is configured to perform the operations below.

The original waypoint sequence is projected so that a first waypoint sequence is obtained.

Coordinate translation is performed on the first waypoint sequence so that a second waypoint sequence in the coordinate system with the origin being the starting waypoint of the way of the vehicle is obtained, and the second waypoint sequence is used as the intermediate waypoint sequence.

Further, an abscissa in a coordinate system which the first waypoint sequence belongs to represents the distance from a waypoint to the central meridian of a longitude zone, and an ordinate in the coordinate system represents the distance from a waypoint to the equator.

Further, each waypoint in the intermediate waypoint sequence includes a yaw angle. Accordingly, the determination module 430 is further configured to perform the operation below.

At least one waypoint in the intermediate waypoint sequence is deleted so that a screened intermediate waypoint sequence is obtained, where a difference between a yaw angle of each of the at least one waypoint and a yaw angle of the starting waypoint of the way of the vehicle is greater than a preset yaw angle.

Further, the determination module 430 is configured to perform the operations below.

For each waypoint in the intermediate waypoint sequence, a slope of two waypoints adjacent to each waypoint is determined.

The determined slope of the two waypoints is determined as the slope of each waypoint.

Further, the second conversion module 440 is configured to perform the operations below.

Slopes of all waypoints in the intermediate waypoint sequence are sorted.

A preset number of slopes are selected from the sorted slopes according to a preset rule.

An average slope of the preset number of slopes is calculated.

The intermediate waypoint sequence is converted into the target waypoint sequence in the DR coordinate system according to the average slope.

Further, that the intermediate waypoint sequence is converted into the target waypoint sequence in the DR coordinate system according to the average slope includes the operations below.

A first angle of the intermediate waypoint sequence in the coordinate system where the intermediate waypoint sequence is located is calculated according to the average slope.

The intermediate waypoint sequence is converted into the target waypoint sequence in the DR coordinate system according to the first angle and conversion formulae.

Further, the conversion formulae include the following:

$$x_i^3 = x_i^2 \cdot \cos(\theta) - y_i^2 \cdot \sin(\theta),$$

and

$$y_i^3 = x_i^2 \cdot \sin(\theta) + y_i^2 \cdot \cos(\theta);$$

where i represents a positive integer, $\theta$ represents the first angle, $(x_i^2, y_i^2)$ represents coordinates of a waypoint in the intermediate waypoint sequence, and $(x_i^3, y_i^3)$ represents coordinates of a waypoint in the target waypoint sequence.

Further, the acquisition module 410 is configured to perform the operations below.

After the vehicle travels straight for a distance, latitude and longitude coordinates and yaw angles of the vehicle are determined with onboard integrated navigation.

The original waypoint sequence is obtained according to the latitude and longitude coordinates and the yaw angles.

The preceding vehicle waypoint determination apparatus may perform the vehicle waypoint determination method according to any embodiment of the present application and has function modules and beneficial effects corresponding to the performed method.

Embodiment five

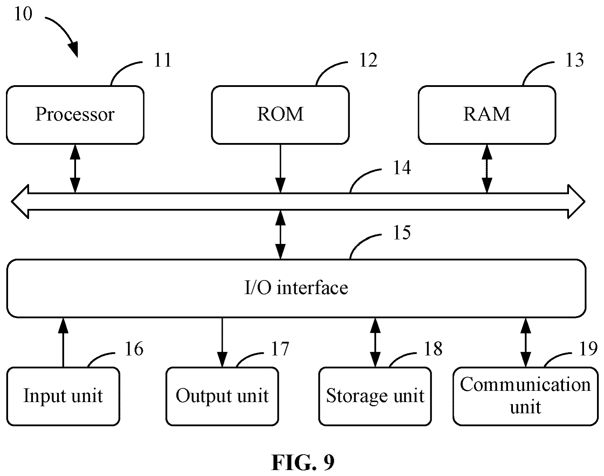

FIG. 9 is a structural diagram of a vehicle 10 that can implement an embodiment of the present application. Herein the shown components, the connections and relationships between these components and the functions of these components are illustrative and are not intended to limit the implementation of the present application as described and/or claimed herein.

As shown in FIG. 9, the vehicle 10 includes at least one processor 11 and a memory communicatively connected to the at least one processor 11, such as a read-only memory (ROM) 12 and a random-access memory (RAM) 13. The memory stores a computer program executable by the at least one processor. The processor 11 can perform various appropriate actions and processing according to a computer program stored in the ROM 12 or a computer program loaded into the RAM 13 from a storage unit 18. Various programs and data required for the operation of the vehicle 10 may also be stored in the RAM 13. The processor 11, the ROM 12, and the RAM 13 are connected to each other through a bus 14. An input/output (I/O) interface 15 is also connected to the bus 14.

Multiple components in the vehicle 10 are connected to the I/O interface 15. The multiple components include an input unit 16 such as a keyboard or a mouse, an output unit 17 such as various types of display or speaker, the storage unit 18 such as a magnetic disk or an optical disk, and a communication unit 19 such as a network card, a modem or a wireless communication transceiver. The communication unit 19 allows the vehicle 10 to exchange information/data with other devices over a computer network such as the Internet and/or various telecommunications networks.

The processor 11 may be various general-purpose and/or special-purpose processing components having processing and computing capabilities. Examples of the processor 11 include, but are not limited to, a central processing unit (CPU), a graphics processing unit (GPU), a special-purpose artificial intelligence (AI) computing chip, a processor executing machine learning models and algorithms, a digital signal processor (DSP), and any appropriate processor, controller, and microcontroller. The processor 11 performs the preceding methods and processing, such as a vehicle waypoint determination method.

In some embodiments, the vehicle waypoint determination method may be implemented as a computer program tangibly included in a computer-readable storage medium such as the storage unit 18. In some embodiments, part or all of computer programs may be loaded and/or installed onto the vehicle 10 via the ROM 12 and/or the communication unit 19. When the computer programs are loaded into the RAM 13 and executed by the processor 11, one or more steps of the preceding vehicle waypoint determination method may be performed. Alternatively, in other embodiments, the processor 11 may be configured in any other appropriate manner (for example, by means of firmware) to perform the vehicle waypoint determination method.

Herein various embodiments of the preceding systems and techniques may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), computer hardware, firmware, software, and/or combinations thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus, and at least one output apparatus and transmitting data and instructions to the memory system, the at least one input apparatus, and the at least one output apparatus.

Computer programs for implementation of the methods of the present application may be written in one programming language or any combination of multiple programming languages. These computer programs may be provided for a processor of a general-purpose computer, a special-purpose computer, or another programmable data processing apparatus to enable functions/operations specified in a flowchart and/or a block diagram to be implemented when the computer programs are executed by the processor. The computer programs may be executed entirely on a machine, partly on a machine, as a stand-alone software package, partly on a machine and partly on a remote machine, or entirely on a remote machine or a server.

In the context of the present application, the computer-readable storage medium may be a tangible medium that may include or store a computer program for use by or in connection with an instruction execution system, apparatus, or device. The computer-readable storage medium may include, but is not limited to, an electronic, magnetic, optical, electromagnetic, infrared, or semiconductor system, apparatus, or device or any appropriate combination thereof. Alternatively, the computer-readable storage medium may be a machine-readable signal medium. Examples of a machine-readable storage medium include an electrical connection based on one or more wires, a portable computer disk, a hard disk, a RAM, a ROM, an erasable programmable read-only memory (EPROM), a flash memory, an optical fiber, a portable compact disc read-only memory (CD-ROM), an optical storage device, a magnetic storage device or any appropriate combination thereof.

In order that interaction with a user is provided, the systems and techniques described herein may be implemented in the vehicle. The vehicle has a display apparatus (for example, a cathode-ray tube (CRT) or a liquid-crystal display (LCD) monitor) for displaying information to the user; and a keyboard and a pointing apparatus (for example, a mouse or a trackball) through which the user can provide input for the vehicle. Other types of apparatuses may also be used for providing interaction with the user. For example, feedback provided for the user may be sensory feedback in any form (for example, visual feedback, auditory feedback, or tactile feedback); and input from the user may be received in any form (including acoustic input, voice input, or tactile input).

The systems and techniques described herein may be implemented in a computing system including a back-end component (for example, a data server), a computing system including a middleware component (for example, an application server), a computing system including a front-end component (for example, a user computer having a graphical user interface or a web browser through which the user can interact with embodiments of the systems and techniques described herein) or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network, and the Internet.

The computing system may include clients and servers. A client and a server are generally remote from each other and typically interact through a communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in a related physical host and a related virtual private server (VPS).

It is to be understood that various forms of the preceding flows may be used with steps reordered, added, or deleted. For example, the steps described in the present application may be executed in parallel, in sequence, or in a different order as long as the desired results of the technical solutions of the present application can be achieved. The execution sequence of the steps is not limited herein.

**Claims**

1. A vehicle waypoint determination method, comprising:

   acquiring an original waypoint sequence of a vehicle in a geodetic coordinate system;
   converting the original waypoint sequence into an intermediate waypoint sequence in a coordinate system with an origin being a starting waypoint of a way of the vehicle;
   determining a slope of each waypoint in the intermediate waypoint sequence; and
   converting, according to the slope of each waypoint in the intermediate waypoint sequence, the intermediate waypoint sequence into a target waypoint sequence in a dead reckoning, DR, coordinate system.

2. The vehicle waypoint determination method of claim 1, wherein converting the original waypoint sequence into the intermediate waypoint sequence in the coordinate system with the origin being the starting waypoint of the way of the vehicle comprises:

   projecting the original waypoint sequence to obtain a first waypoint sequence; and
   performing coordinate translation on the first waypoint sequence to obtain a second waypoint sequence in the coordinate system with the origin being the starting waypoint of the way of the vehicle, and using the second waypoint sequence as the intermediate waypoint sequence.

3. The vehicle waypoint determination method of claim 2, wherein an abscissa in a coordinate system which the first waypoint sequence belongs to represents a distance from a waypoint to a central meridian of a longitude zone, and an ordinate in the coordinate system represents a distance from a waypoint to an equator.

4. The vehicle waypoint determination method of claim 1, wherein each waypoint in the intermediate waypoint sequence comprises a yaw angle; and before determining the slope of each waypoint in the intermediate waypoint sequence, the vehicle waypoint determination method further comprises:
deleting at least one waypoint in the intermediate waypoint sequence to obtain a screened intermediate waypoint sequence, wherein a difference between a yaw angle of each of the at least one waypoint and a yaw angle of the starting waypoint of the way of the vehicle is greater than a preset yaw angle.

5. The vehicle waypoint determination method of claim 1 or 4, wherein determining the slope of each waypoint in the intermediate waypoint sequence comprises:

for each waypoint in the intermediate waypoint sequence, determining a slope of two waypoints adjacent to each waypoint; and
determining the determined slope of the two waypoints as the slope of each waypoint.

6. The vehicle waypoint determination method of claim 1, wherein converting, according to the slope of each waypoint in the intermediate waypoint sequence, the intermediate waypoint sequence into the target waypoint sequence in the DR coordinate system comprises:

sorting slopes of all waypoints in the intermediate waypoint sequence;
selecting a preset number of slopes from the sorted slopes according to a preset rule;
calculating an average slope of the preset number of slopes; and
converting, according to the average slope, the intermediate waypoint sequence into the target waypoint sequence in the DR coordinate system.

7. The vehicle waypoint determination method of claim 6, wherein converting, according to the average slope, the intermediate waypoint sequence into the target waypoint sequence in the DR coordinate system comprises:

calculating, according to the average slope, a first angle of the intermediate waypoint sequence in the coordinate system where the intermediate waypoint sequence is located; and
converting, according to the first angle and conversion formulae, the intermediate waypoint sequence into the target waypoint sequence in the DR coordinate system.

8. The vehicle waypoint determination method of claim 7, wherein the conversion formulae comprise:

$$x_i^3 = x_i^2 \cdot \cos(\theta) - y_i^2 \cdot \sin(\theta),$$

and

$$y_i^3 = x_i^2 \cdot \sin(\theta) + y_i^2 \cdot \cos(\theta);$$

wherein i represents a positive integer, $\theta$ represents the first angle, $(x_i^2, y_i^2)$ represents coordinates of a waypoint in the intermediate waypoint sequence, and $(x_i^3, y_i^3)$ represents coordinates of a waypoint in the target waypoint sequence.

9. The vehicle waypoint determination method of claim 1, wherein acquiring the original waypoint sequence of the vehicle in the geodetic coordinate system comprises:

determining, with onboard integrated navigation, latitude and longitude coordinates and yaw angles of the vehicle after the vehicle travels straight for a distance; and
obtaining the original waypoint sequence according to the latitude and longitude coordinates and the yaw angles.

10. A vehicle waypoint determination apparatus, comprising:

an acquisition module, which is configured to acquire an original waypoint sequence of a vehicle in a geodetic coordinate system;
a first conversion module, which is configured to convert the original waypoint sequence into an intermediate waypoint sequence in a coordinate system with an origin being a starting waypoint of a way of the vehicle;
a determination module, which is configured to determine a slope of each waypoint in the intermediate waypoint sequence; and
a second conversion module, which is configured to convert, according to the slope of each waypoint in the intermediate waypoint sequence, the intermediate waypoint sequence into a target waypoint sequence in a dead reckoning, DR, coordinate system.

11. A vehicle, comprising:

at least one processor; and
a memory communicatively connected to the at least one processor;
wherein a computer program executable by the at least one processor is stored in the memory, and the computer program, when executed by the at least one processor, causes the at least one processor to perform the vehicle waypoint determination method of any one of claims 1 to 9.

12. A computer-readable storage medium having computer instructions stored thereon, wherein the computer instructions, when executed by a processor, cause the processor to perform the vehicle waypoint determination method of any one of claims 1 to 9.

Acquire an original waypoint sequence of a vehicle in a geodetic coordinate system $\sim$ S110

Convert the original waypoint sequence into an intermediate waypoint sequence in a coordinate system with the origin being a starting waypoint of a way of the vehicle $\sim$ S120

Determine a slope of each waypoint in the intermediate waypoint sequence $\sim$ S130

Convert, according to the slope of each waypoint in the intermediate waypoint sequence, the intermediate waypoint sequence into a target waypoint sequence in a DR coordinate system $\sim$ S140

**FIG. 1**

**FIG. 2**

Acquire an original waypoint sequence of a vehicle in a geodetic coordinate system $\sim$ S210

Project the original waypoint sequence to obtain a first waypoint sequence $\sim$ S220

Perform coordinate translation on the first waypoint sequence to obtain a second waypoint sequence in a coordinate system with the origin being a starting waypoint of a way of the vehicle, and use the second waypoint sequence as an intermediate waypoint sequence $\sim$ S230

Determine a slope of each waypoint in the intermediate waypoint sequence $\sim$ S240

Convert, according to the slope of each waypoint in the intermediate waypoint sequence, the intermediate waypoint sequence into a target waypoint sequence in a DR coordinate system $\sim$ S250

**FIG. 3**

**FIG. 4**

**FIG. 5**

EP 4 737 858 A1

Acquire an original waypoint sequence of a vehicle in a geodetic coordinate system ⟶ S310

Convert the original waypoint sequence into an intermediate waypoint sequence in a coordinate system with the origin being a starting waypoint of a way of the vehicle ⟶ S320

Determine a slope of each waypoint in the intermediate waypoint sequence ⟶ S330

Sort slopes of all waypoints in the intermediate waypoint sequence ⟶ S340

Select a preset number of slopes from the sorted slopes according to a preset rule ⟶ S350

Calculate an average slope of the preset number of slopes ⟶ S360

Convert, according to the average slope, the intermediate waypoint sequence into a target waypoint sequence in a DR coordinate system ⟶ S370

**FIG. 6**

**FIG. 7**

| Acquisition module | First conversion module | Determination module | Second conversion module |

**FIG. 8**

**FIG. 9**

## INTERNATIONAL SEARCH REPORT

| International application No. |
| --- |
| **PCT/CN2023/141390** |

| A. | CLASSIFICATION OF SUBJECT MATTER |
| --- | --- |

G01C21/34(2006.01)i; G01S19/39(2010.01)i; G01S19/49(2010.01)i

According to International Patent Classification (IPC) or to both national classification and IPC

| B. | FIELDS SEARCHED |
| --- | --- |

Minimum documentation searched (classification system followed by classification symbols)

IPC: G01C G01S

Documentation searched other than minimum documentation to the extent that such documents are included in the fields searched

Electronic data base consulted during the international search (name of data base and, where practicable, search terms used)

CNABS: CNTXT; CNKI; VEN; WOTXT; EPTXT; USTXT; IEEE: 航迹推算, 航位推算, 转换, 大地, 地球, 坐标, 经度, 纬度, 路径, 起始点, 起点, 原点, 斜率, dead reckoning, DR, convert+, ground, geodetic, longitude, latitude, coordinate? , path, starting point, origin, slope

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116839612 A (HUIZHOU DESAY SV AUTOMOTIVE CO., LTD.) 03 October 2023 (2023-10-03) <br> description, paragraphs [0001]-[0160], and figures 1-9 | 1-12 |
| A | CN 104359492 A (HEFEI INSTITUTES OF PHYSICAL SCIENCE, CHINESE ACADEMY OF SCIENCES) 18 February 2015 (2015-02-18) <br> description, paragraphs [0035]-[0071], and figures 1-3 | 1-12 |
| A | CN 115792988 A (CHERY AUTOMOBILE CO., LTD.) 14 March 2023 (2023-03-14) <br> entire document | 1-12 |
| A | CN 115407370 A (CHONGQING CHANG'AN AUTOMOBILE CO., LTD.) 29 November 2022 (2022-11-29) <br> entire document | 1-12 |
| A | JP H07159187 A (KOMATSU MFG CO., LTD.) 23 June 1995 (1995-06-23) <br> entire document | 1-12 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 March 2024** | **08 April 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/141390**

| Patent document cited in search report | | | Publication date (day/month/year) | Patent family member(s) | | | Publication date (day/month/year) |
|---|---|---|---|---|---|---|---|
| CN | 116839612 | A | 03 October 2023 | None | | | |
| CN | 104359492 | A | 18 February 2015 | None | | | |
| CN | 115792988 | A | 14 March 2023 | None | | | |
| CN | 115407370 | A | 29 November 2022 | None | | | |
| JP | H07159187 | A | 23 June 1995 | JP | 3458314 | B2 | 20 October 2003 |

Form PCT/ISA/210 (patent family annex) (July 2022)

**REFERENCES CITED IN THE DESCRIPTION**

**Patent documents cited in the description**

- CN 202310803029